**Europäisches Patentamt**

**European Patent Office**

**Office européen des brevets**

(19)

(11) Numéro de publication: **0 099 784**

**B1**

(12) # FASCICULE DE BREVET EUROPÉEN

(45) Date de publication du fascicule du brevet:
**24.09.86**

(51) Int. Cl.⁴: **H 02 H 3/093**

(21) Numéro de dépôt: **83401322.9**

(22) Date de dépôt: **27.06.83**

(54) Déclencheur électronique analogique pour disjoncteur de protection contre les surintensités d'un réseau à courant alternatif.

(30) Priorité: **12.07.82 FR 8212329**

(43) Date de publication de la demande:
**01.02.84 Bulletin 84/5**

(45) Mention de la délivrance du brevet:
**24.09.86 Bulletin 86/39**

(84) Etats contractants désignés:
**BE CH DE GB IT LI NL SE**

(56) Documents cité:
**DE-A-2 023 317
DE-A-2 148 581
DE-A-2 402 091**

(73) Titulaire: **MERLIN GERIN, Rue Henri Tarze, F-38050 Grenoble Cedex (FR)**

(72) Inventeur: **Demeyer, Pierre, Merlin Gerin Rue Henri Tarze, F-38050 Grenoble Cedex (FR)**
Inventeur: **Duval, Philippe, Merlin Gerin Rue Henri Tarze, F-38050 Grenoble Cedex (FR)**

(74) Mandataire: **Kern, Paul, Merlin Gerin Sce. Brevets 20, rue Henri Tarze, F-38050 Grenoble Cedex (FR)**

## Description

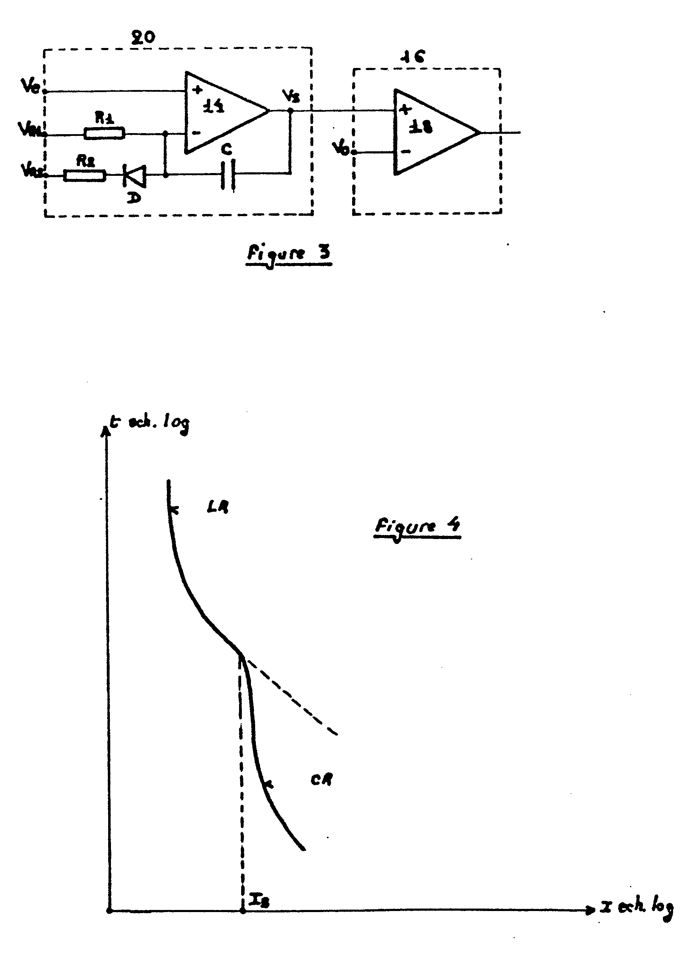

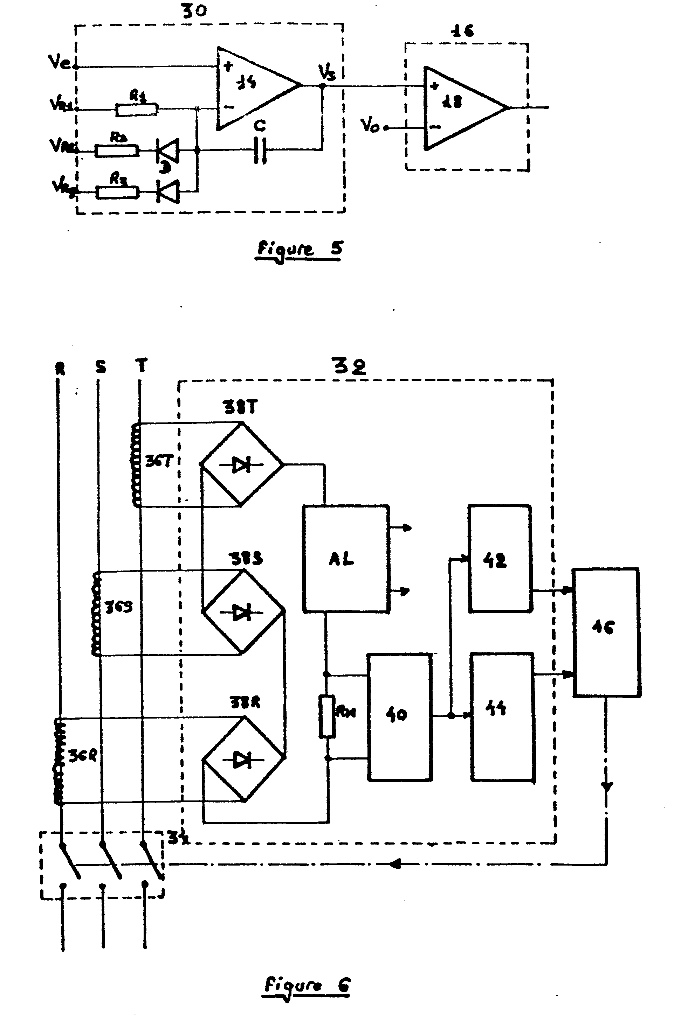

L'invention est relative à un déclencheur électronique associé à un disjoncteur de protection d'un réseau à courant alternatif, tel que défini au préambule de la revendication 1. Le document DE-A-2402091 se rapporte à un déclencheur électronique temporisé, constitué par un circuit intégrateur à amplificateur opérationnel comprenant deux entrées en opposition de phase et un condensateur de contre réaction connecté entre la sortie et l'entrée déphaseuse de l'amplificateur. La sortie de l'amplificateur est associée à un détecteur de niveau ayant une tension de seuil ajustable. Le circuit de déclenchement temporisé est commandé par un système de commutation à transistors, lequel est intercalé entre l'amplificateur opérationnel et le dispositif de détection du courant à surveiller. Selon le mode de réalisation de la figure 3, l'entrée déphaseuse de l'amplificateur intégrateur est reliée parallèlement à deux résistances de sommation, de manière à obtenir une caractéristique hyperbolique de déclenchement à temps inverse du type I.t = k, k étant une constante, et étant la valeur du courant à surveiller rapporté au courant nominal de réglage de l'appareil. On remarque qu'une telle fonction I.t = k n'est pas adaptée pour définir une caractéristique idéale de déclenchement contre les courants de surcharge. Les variantes de réalisation des figures 5, 7 et 8 proposent des circuits de déclenchement temporisé un générateur de fonction auxiliaire placé entre le capteur de courant et l'intégrateur. Le générateur de fonction est constitué par un circuit auxiliaire à amplificateur opérationnel, non linéaire qui est distinct de celui de l'intégrateur.

Certains générateurs de fonction non linéaire permettent d'obtenir une caractéristique de déclenchement idéale $I^2t = k$, mais nécessitent néanmoins un circuit électronique compliqué comprenant un circuit élévateur au carré du signal représentatif du courant à surveiller, et un circuit additionnel intégrateur connecté à un détecteur de niveau. Un amplificateur opérationnel est nécessaire pour chaque fonction, et la complexité de ce montage est particulièrement onéreux pour des disjoncteurs de bas calibres.

L'objet de l'invention consiste à réaliser un déclencheur électronique simple et bon marché ayant un encombrement compatible avec le volume réduit des disjoncteurs à boîtiers moulés de bas calibres.

Le circuit analogique défini dans la caractéristique de la revendication 1 délivre une caractéristique de déclenchement à temps inverse du type t =

$$L \frac{b - aI}{aI - c}$$

qui peut être assimilée par approximation à la fonction idéale $I^2t = k$. La constante de temps de l'intégrateur est ajustable et à chaque valeur de la constante de temps correspond une courbe de déclenchement prédéterminée.

On remarque que la caractéristique de déclenchement du circuit électronique de déclenchement temporisé selon l'invention est obtenue malgré l'absence de tout circuit spécial de commande pilotant le fonctionnement de l'intégrateur, et de tout générateur de fonction auxiliaire. Il en résulte une diminution du nombre des composants et une possibilité de miniaturisation du circuit électronique du déclencheur.

En appliquant deux tensions de seuil à l'entrée déphaseuse de l'opérateur intégrateur, il est possible d'obtenir une courbe de déclenchement particulière comprenant une première rampe à protection long retard contre les surintensités, et une deuxième rampe à protection court retard contre les courts-circuits. Le choix du déclenchement résulte de la valeur de la deuxième tension de seuil et de la tension d'entrée proportionnelle au courant à surveiller. Si cette tension d'entrée est comprise entre les valeurs de référence des deux tensions de seuil, l'intégrateur est caractérisé par une première constante de temps qui détermine la première rampe de la courbe. Lorsque la tension d'entrée est supérieure à la deuxième tension de seuil, la nouvelle constante de temps inférieure à la première engendre la deuxième rampe à protection court-retard. La valeur de la deuxième tension de seuil est ajustable pour fixer le seuil de déclenchement à court retard.

Le dispositif décrit dans le document DE-A-2148581 ne permet pas d'obtenir la double fonction de protection à long retard LR contre les surintensités, et à court retard CR contre les courts-circuits, étant donné que la caractéristique de déclenchement possède une seule rampe.

Selon un développement de l'invention, il est possible d'obtenir une courbe de déclenchement à trois rampes grâce à un opérateur intégrateur à trois tensions de seuil prédéterminées.

On remarque que l'opérateur analogique du circuit de déclenchement temporisé selon l'invention est formé par un seu; amplificateur opérationnel intégrateur dont la courbe de déclenchement souhaitée dépend de la valeur et du nombre de tensions de seuil. La structure du déclencheur est ainsi simplifiée à un minimum de composants.

D'autres avantages et caractéristiques ressortiront plus clairement de l'exposé qui va suivre de différents modes de mise en oeuvre de l'invention donnés à titre d'exemples non limitatifs et représentés aux dessins annexés, dans lesquels:
- La figure 1 représente le schéma d'un opérateur analogique intégrateur associé à un circuit à seuil pour constituer un déclencheur temporisé selon l'invention;
- la figure 2 montre deux caractéristiques de déclenchement à échelle linéaire du temps de déclenchement en fonction du courant à surveiller rapporté au courant de réglage, la courbe A (en pointillé) étant la caractéristique idéale de la forme $I^2t = k$, et B (en traits forts) la caractéristique obtenue au moyen de l'opérateur selon la figure 1;
- la figure 3 est une variante de la figure 1, représentant un opérateur à deux tensions de seuil;
- la figure 4 montre à échelle logarithmique la caractéristique de déclenchement délivrée par l'opérateur selon la figure 3;
- la figure 5 est une autre variante de la fig. 1;
- la figure 6 montre le schéma synoptique d'un déclencheur électronique incorporant un circuit de déclenchement temporisé selon l'invention;
- la figure 7 est le schéma détaillé du déclencheur selon la fig. 6, l'opérateur du circuit déclencheur temporisé étant du type illustré à la fig. 3.

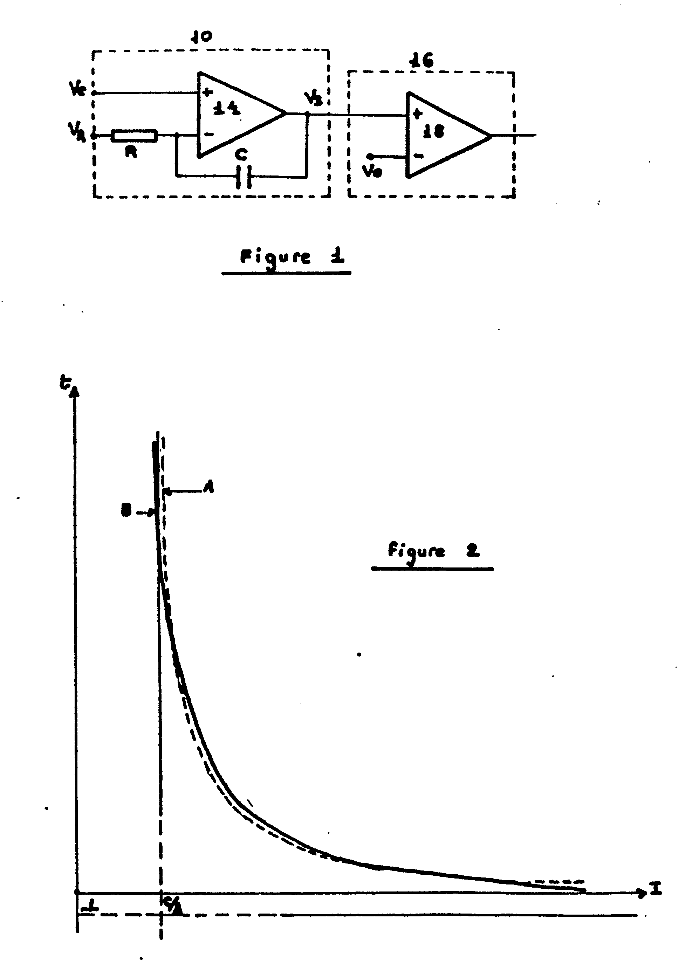

La figure 1 représente un circuit électronique analogique 10 comprenant un intégrateur formé par un amplificateur opérationnel 14 dont la boucle de contre réaction capacitive comporte un condensateur C connecté entre la sortie et l'entrée déphaseuse (entrée -) de l'amplificateur 14. Le circuit de l'entrée déphaseuse est doté d'une résistance R dont la valeur fixe ou régable détermine la constante de temps RC de l'intégrateur 12. L'entrée déphaseuse (entrée -) et l'entrée directe (entrée +) de l'amplificateur 14 sont pilotées respectivement par deux tensions d'entrées $V_R$ et $V_e$, $V_R$ étant la tension de seuil de l'intégrateur 12. Le signal intégré $V_S$ de sortie de l'intégtateur 12 est délivré à un détecteur de niveau 16 formé par un amplificateur opérationnel 18 à tension de seuil $V_o$. L'amplificateur intégrateur 14 est bloqué lorsque la tension d'entrée $V_e$ est inférieure à la tension de seuil $V_R$, et la capacité C est alors déchargée. Le déblocage de l'amplificateur 14 s'opère si la tension $V_e$ est supérieure à la tension de seuil $V_R$ et la tension de sortie $V_S$ de l'amplificateur 14 atteint la tension de seuil $V_o$ du détecteur de niveau 16 au bout d'un temps $t =$

$$RC \frac{V_o - V_e}{V_e - V_R} .$$

L'allure de la courbe de déclenchement souhaitée pour la protection contre les surintensités est généralement définie par la relation $I^2t = k$ dans laquelle k est une constante, t le temps de déclenchement du déclencheur, et I la valeur du courant traversant le disjoncteur rapporté au courant de réglage. Cette fonction non linéaire à temps inverse est représentée à échelle linéaire par la courbe A en pointillé de la fig 2. Un calcul par approximations permet d'assimiler la fonction idéale $I^2t = k$ à une fonction équivalente définie par la relation $t =$

$$L \frac{b - aI}{aI - c} .$$

Cette fonction équivalente s'identifie avec la relation $t =$

$$RC \frac{V_o - V_e}{V_e - V_R}$$

déterminée par l'opérateur analogique 10 de la fig. 1, lorsque l'amplificateur intégrateur 12 est débloqué:
- t est le temps de déclenchement,
- L représente la constante de temps RC de l'intégrateur 12,
- b représente la tension de seuil $V_o$ de l'amplificateur 18 agencé à la sortie de l'intégrateur 12,
- c represente la tension de seuil $V_R$ de l'intégrateur 12,
- aI représente la tension d'entrée $V_e$ de l'intégrateur 12,
a étant le coefficient de proportionnalité entre la tension $V_e$ et le courant traversant le disjoncteur rapporté au courant de réglage.

La fonction obtenue par l'opérateur analogique 10 de la figure 1 est ainsi représentée par la courbe B de déclenchement de la fig. 2 (en traits forts). L'allure de la courbe B est très voisine de celle de la courbe souhaitée A, et peut constituer avantageusement une caractéristique de déclenchement à temps inverse d'un déclencheur statique pour la protection contre les surintensités.

La courbe B de déclenchement représentée sur la fig. 2 correspond à une valeur prédéterminée de la résistance R connectée à l'entrée déphaseuse de l'amplificateur opérationnel 14. En remplaçant la résistance R par un potentiomètre, on peut ajuster la valeur de la constante de temps RC de l'intégrateur 12 selon la position du curseur. On obtient alors une famille de caractéristiques B de déclenchement contre les surintensité, et le choix de la courbe s'opère au moyen d'un bouton de réglage du potentiomètre.

A chaque position du curseur du potentiomètre correspond une courbe de déclenchement particulière.

Sur la figure 3, l'opérateur analogique 20 est similaire à celui de la fig. 1, mais l'entrée déphaseuse de l'amplificateur opérationnel 14 est pilotée à travers des résistances $R_1$, $R_2$ par une première et und deuxième tension de seuil $V_{R1}$ et $V_{R2}$ de valeurs distinctes. Une diode D est insérée entre la résistance $R_2$ et l'amplificateur 14, l'entrée déphaseuse étant reliée à l'anode de la diode D. Le reste de l'opérateur 20 est identique à celui de la fig. 1 La tension $V_e$ appliquée à l'entrée directe de l'amplificateur 14 est fonction du courant 1 traversant le disjoncteur rapporté au courant de réglage.

Le fonctionnement de l'opérateur analogique 20 selon la figure 3 est le suivant:

Lorsque la valeur de la tension d'entrée $V_e$ appliquée a l'entrée directe de l'amplificateur opérationnel 14 est comprise entre les valeurs de référence des deux tensions de seuil $V_{R1}$ et $V_{R2}$, le fonctionnement de l'opérateur 20 est identique à celui de l'opérateur 10 de la fig. 1. La constante de temps $R_1C$ de l'intégrateur engendre une courbe de déclenchement B illustrée à la fig. 2.

Lorsque la tension d'entrée $V_e$ est supérieure à la deuxième tension de seuil $V_{R2}$ de l'amplificateur 14, la constante de temps $R_2C$ de l'intégrateur est modifiée et on obtient une autre courbe de déclenchement caractérisée par un seuil de déclenchement plus élevé que le premier. La figure 4 illustre à échelle logarithmique la courbe de déclenchement résultante obtenue au moyen de l'opérateur analogique 20. On remarque que la courbe à deux rampes comprend une partie LR à protection long retard contre les surintensités et une partie CR à protection court retard contre les courts-circuits; la fonction de déclenchement à court retard est obtenue après dépassement par le courant du seuil $I_s$ de déclenchement court retard, c'est-à-dire lorsque $V_e$ est supérieure à la tension de seuil $V_{R2}$.

La figure 5 montre un opérateur analogique 30 similaire à l'opérateur 20 de la fig. 3, mais comprenant en plus un circuit de reference supplémentaire dans lequel une troisième tension $V_{R3}$ est appliquée à travers und resistance $R_3$ et une diode D à l'entrée déphaseuse de l'amplificateur 14 intégrateur. La courbe de déclenchement résultante présente alors trois rampes, à savoir une première rampe LR de déclenchement à long retard (protection contre les surintensités) lorsque la tension $V_e$ est comprise entre les tensions de seuil $V_{R1}$ et $V_{R2}$, une deuxième rampe intermédiaire $CR_2$ de déclenchement à court-retard (protection contre les courts-circuits) lorsque la tension $V_e$ est comprise entre les tensions de seuil $V_{R2}$ et $V_{R3}$, et une troisième rampe $CR_1$ de déclenchement à court-retard (protection contre les courts-circuits importants) quand $V_e$ est supérieure à la tension de seuil $V_{R3}$. La deuxième rampe $CR_2$ intermédiaire est délimitée par deux courants de seuil $I_{S1}$ et $I_{S2}$ à court retard de valeurs prédéterminées.

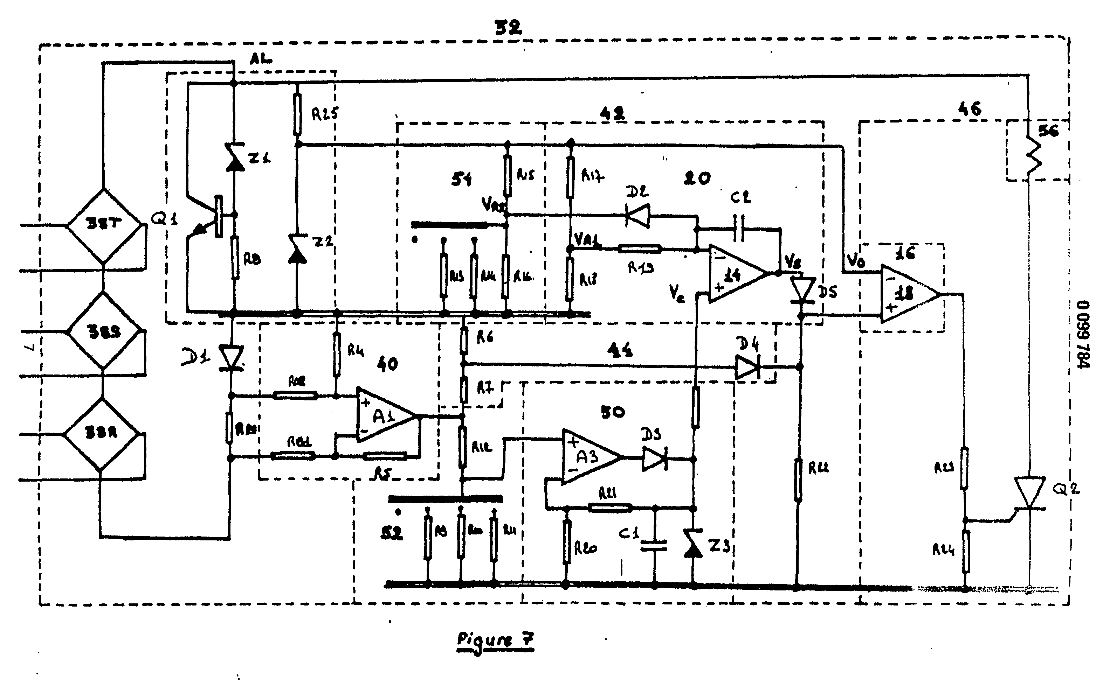

La figure 6 montre le schéma synoptique d'un déclencheur électronique 32 sans source auxiliaire pour la commande d'un disjoncteur 34 de protection des lignes R, S, T d'un réseau alternatif triphasé. L'intensité du courant circulant dans chaque ligne R,S,T est contrôlée par un transformateur de courant 36R, 36S, 36T dont l'enroulement secondaire de mesure est connecté à un pont redresseur 38R, 38S, 38T à double alternance. Les sorties des ponts 38R, 38S, 38T sont mises en série et le signal redressé total est appliqué à un circuit d'alimentation AL et à une résistance de mesure $R_M$. Le signal de mesure aux bornes de la résistance $R_M$ est délivré à un détecteur de niveau associé à un circuit de mise en forme 40 cooperant avec un circuit de déclenchement temporisé 42 et un circuit de déclenchement instantané 44. Un circuit à seuil et de commande 46 est piloté par les signaux de sortie des deux circuits de déclenchement temporisé 42 et instantané 44 pour provoquer l'ouverture du disjoncteur 34 lorsque le courant de ligne dépasse un seuil prédéterminé. Le circuit de déclenchement temporisé 42 peut être matérialisé par l'un quelconque des opérateurs analogiques 10, 20, 30 décrits précédemment respectivement en référence aux figures 1, 3 et 5. Le circuit de déclenchement instantané 44 est généralement prévu pour des installations à faible tenue électrodynamique. Le seuil de déclenchement instantané est supérieur au seuil de déclenchement temporisé et est legèrement inférieur au courant maximum de tenue électrodynamique du disjoncteur.

La figure 7 représente un mode de réalisation du déclencheur 32 statique à propre courant selon la fig. 6, le circuit de déclenchement temporisé 42 utilisé étant par exemple du type à opérateur analogique 20 à deux tensions de seuil $V_{R1}$ et $V_{R2}$, illustré aux figures 3 et 4. Le circuit 40 relié aux bornes de la résistance de mesure $R_N$ comporte un amplificateur différentiel $A_1$ associé à des résistances $R_{01}$, $R_{02}$, $R_4$ et $R_5$. La résistance $R_{02}$ est connectée à l'entrée directe (+) et à l'une des bornes de la résistance de mesure $R_M$ reliée au pôle négatif de l'alimentation AL par une diode $D_1$. La résistance $R_4$ est branchée entre l'entrée directe de l'amplificateur $A_1$ et le pôle négatif de l'alimentation AL, tandis que la résistance $R_{01}$ est reliée entre l'entrée déphaseuse (-) et l'autre borne de la résistance de mesure $R_M$. La résistance $R_5$ de contre réaction est connectée entre la sortie de l'amplificateur $A_1$ et l'entrée déphaseuse.

La sortie de l'amplificateur différentiel $A_1$ est branchée d'une part au circuit de déclenchement instantané 44 formé par un pont résistif $R_6$-$R_7$ à point milieu relié à une diode $D_4$, et d'autre part à un circuit de mise en forme comprenant un detecteur de crête 50. Ce dernier est équipé d'un amplificateur opérationnel $A_3$ dont l'entrée déphaseuse (-) est connectée au pôle négatif de l'alimentation AL par l'intermédiaire d'une résistance $R_{20}$ en parallèle sur un circuit série à résistance $R_{21}$ et condensateur $C_1$. Une diode Zener $Z_3$ est en parallèle sur le condensateur $C_1$ et la sortie de l'amplificateur $A_3$ est reliée à travers une diode $D_3$ a l'entrée directe (+) de l'amplificateur intégrateur 14 du circuit de déclenchement temporisé 42. L'entrée directe (+) de l'amplificateur $A_3$ est en liaison avec un sélecteur 52 résistif, par exemple à résistances

$R_{12}$ - $R_{11}$ - $R_{10}$ - $R_9$ ou à potentiomètre branché entre le pôle négatif de l'alimentation et la sortie de l'amplificateur différentiel $A_1$. Le sélecteur résistif 52 assure le réglage de la plage de la tension $V_e$ pour les fonctions long retard et court retard du circuit de déclenchement temporisé 42 grâce à l'ajustement du coefficient de proportionalité à figurant dans la relation $t = $

$$L \frac{b - aI}{aI - c} \cdot$$

L'entrée déphaseuse (-) de l'amplificateur intégrateur 14 à condensateur C de contre-réaction du circuit de déclenchement temporisé 42 est connecté par une résistance $R_{19}$ à un diviseur à résistances $R_{17}$ - $R_{18}$, branché en parallèle aux bornes d'une diode Zener $Z_2$ de l'alimentation AL. La tension aux bornes de la résistance $R_{18}$ constitue la première tension de seuil $V_{R1}$ de l'amplificateur intégrateur 14 tel que décrit en référence à la figure 3. Une diode $D_2$ est reliée par son anode à l'entrée déphaseuse de l'amplificateur 14 et par sa cathode à un dispositif d'ajustage 54 du seuil de déclenchement à court retard $I_S$ du circuit 42 fixé par la deuxième tension de seuil $V_{R2}$. Le dispositif d'ajustage 54 formé par un commutateur à résistances $R_{13}$ - $R_{14}$ - $R_{15}$ et $R_{16}$ ou par un potentiomètre est branché en parallèle aux bornes de la diode Zener $Z_2$ et permet la modification de la constante de temps de l'amplificateur intégrateur 14.

La sortie de l'amplificateur intégrateur 14 est connecté à travers une diode $D_5$ à l'entrée directe de l'amplificateur 18 du détecteur de niveau 16, l'autre entrée (-) étant reliée à la diode Zener $Z_2$ pour fixer la tension de seuil $V_o$ à la sortie de l'amplificateur 14. La diode $D_4$ du circuit de déclenchement instantané 44 est également branchée à l'entrée directe (+) de l'amplificateur 18. La sortie de ce dernier peut commander l'amorçage d'un thyristor $Q_2$ relié en série avec la bobine de declenchement 56 du disjoncteur 34, l'ensemble bobine 56, et thyristor $Q_2$ étant connecté aux pôles positif et négatif de l'alimentation AL à propre courant.

Le fonctionnement du déclencheur électronique 32 selon la figure 7 est le suivant:

En régime nominal, la tension aux bornes de la résistance de mesure $R_N$ est insuffisante pour débloquer le circuit de déclenchement temporisé 42, le circuit à déclenchement instantané 44 et le détecteur de niveau 16. Le thyristor se trouve dans l'état non conducteur, et la bobine 56 de déclenchement n'est pas alimentée.

Le déblocage du circuit de déclenchement temporisé 42 s'effectue lors de l'apparition d'un courant de surcharge ou de court circuit dans l'une des lignes R,S,T du réseau à protéger. Si le court-circuit est très important, le circuit de déclenchement instantané 44 réagit avant le circuit de déclenchement temporisé 42 et provoque l'amorçage immédiat du thyristor $Q_2$

par l'intermédiaire du détecteur de niveau 16.

Le circuit de déclenchement 42 temporisé intervient lorsque l'intensite du courant de defaut est inférieure au seuil de déclenchement instantané. La tension $V_e$ appliquée à l'entrée (+) de l'amplificateur intégrateur 14 dépend de l'intensité du courant à surveiller et du facteur de proportionalité "a" déterminé par le réglage préalable du selecteur résistif 52. Pour des surcharges faibles dont l'intensité est inférieure au seuil $I_S$ de déclenchement à court retard (fig. 4), la valeur de tension $V_e$ se trouve entre les tensions de seuil $V_{R1}$ et $V_{R2}$ de l'amplificateur 14. La constante de temps $R_{19}$ - C de l'intégrateur engendre alors une courbe de déclenchement LR à long retard. Pour des courts-circuits dont l'intensité est située entre le seuil $I_S$ de déclenchement à court retard et le seuil de déclenchement instantané, la tension $V_e$ est supérieure à la deuxième tension de seuil $V_{R2}$ ajustée par le commutateur à résistances $R_{13}$ à $R_{16}$. Il en resulte une modification de la constante de temps de l'intégrateur engendrant une courbe de déclenchement CR à court retard. Dans les deux cas de declenchement CR ou LR du circuit 42, le thyristor $Q_2$ est rendu conducteur au bout d'un temps t lorsque la tension de sortie $V_S$ delivrée par l'amplificateur intégrateur 14 atteint la tension de seuil $V_o$ du détecteur de niveau 16.

On remarque que la double fonction du circuit de déclenchement temporisé 42 à court retard ou à long retard est obtenue avec un seul amplificateur intégrateur 14. La structure du déclencheur électronique 32 est ainsi simplifiée à un minimum de composants et présente un encombrement réduit, compatible avec le volume des disjoncteurs basse tension à boitîer moulé de calibres compris entre 250 A et 1000 A.

L'invention n'est bien entendu nullement limitée aux modes de mise en oeuvre plus particulièrement décrits et représentés aux dessins annexés, mais elle s'étend bien au contraire à toute variante restant dans le cadre des équivalences électroniques, notamment celle dans laquelle le réglage de la tension $V_e$ et des tensions de seuil $V_{R1}$ et $V_{R2}$ de l'amplificateur intérateur 14 du circuit de déclenchement temporisé 42 s'effectue par des moyens d'ajustage ne comprenant pas de résistances, et que la modification de la constante de temps de l'integrateur s'opère par variation de la valeur du condensateur C de contre réaction. On remarque que la tension aux bornes du condensateur C de contre-réaction est l'image de la température. Lorsque le courant varie autour du courant de réglage, l'image thermique refroidit d'autant plus vite que le courant est plus faible.

**Revendications**

1. Déclencheur électronique associé à un disjoncteur de protection d'un réseau à courant alternatif, comprenant

- un capteur de courant (36R, 36S, 36T) pour mesurer l'intensité du courant circulant dans chaque ligne (R, S, T) du réseau,

- un circuit de déclenchement temporisé (42) destiné à contrôler le signal représentatif du courant délivré par le capteur, et susceptible d'élaborer par approximation la caractéristique de déclenchement à temps inverse du disjoncteur, au moyen d'un opérateur analogique intégrateur à amplificateur opérationnel (10-, 20-, 30), comprenant deux entrées en opposition de phase, et un condensateur (C) de contre-réaction connecté entre la sortie de l'amplificateur et l'entrée déphaseuse,

- un détecteur de niveau (16) piloté par la sortie de l'amplificateur intégrateur et délivrant un ordre de commande à un organe de commutation lorsque le signal de sortie du circuit de déclenchement temporisé dépasse un seuil prédéterminé en réponse à une augmentation excessive du courant de ligne,

- et une bobine de déclenchement (56) dont l'excitation est pilotée par l'organe de commutation pour provoquer l'ouverture des contacts du disjoncteur, caractérisé par le fait que l'entrée directe de l'amplificateur de l'opérateur analogique intégrateur (10, 20, 30) est reliée à un sélecteur (52) délivrant un signal (Ve) représentatif du courant à surveiller, et que l'entrée déphaseuse dudit amplificateur est pilotée en permanence par au moins un signal de référence correspondant à une tension de seuil prédéterminée (VR1, VR2, VR3), telle que le constante de temps de l'intégrateur est déterminée par le condensateur (C) de contre-réaction, et une résistance (R; R1, R2, R3; R19, 54) connectée dans le circuit d'entrée soumis à la tension de seuil (VR1, VR2, VR3), l'ensemble étant agencé pour que le temps de déclenchement (t) du circuit de déclenchement temporisé (42) est assimilé à la relation

$$L \quad \frac{b - aI}{aI - c}$$

définie par le signal de sortie intégré de l'opérateur, les paramètres L et c représentant respectivement la constante de temps et la tension de seuil (VR1, VR2, VR3) de l'intégrateur, b la tension de seuil (Vo) du détecteur de niveau (16) agencé à la sortie de l'opérateur (10, 20, 30) et a un coefficient de proportionalité ajusté par le sélecteur (52).

2. Déclencheur électronique selon la revendication 1, caractérisé par le fait que l'entrée déphaseuse de l'amplificateur (14) intégrateur est pilotée à travers une première résistance (R1) et une deuxième résistance (R2) respectivement par une première et une deuxième tensions de seuil (VR1, VR2) de valeurs distinctes, et qu'une diode (D) est insérée entre la deuxième résistance (R2) et ladite entrée déphaseuse telle que l'amplificateur (14) intégrateur présente une première constante de temps appropriée à une protection à long retard (LR) contre les surintensités lorsque la valeur de la tension d'entrée (Ve) correspondant au signal représentatif du courant à surveiller est comprise entre les valeurs de référence de la première (VR1) et de la deuxième (VR2) tensions de seuil, et une seconde constante de temps inférieure à la première pour une protection à court-retard (CR) contre les courts-circuits lorsque la tension d'entrée (Ve) est supérieure à la deuxième tension de seuil (VR2), la variation de la constante de temps pour le changement du mode de déclenchement temporisé à long retard (LR) ou à court retard (CR) s'effectuant automatiquement en fonction de la valeur de ladite deuxième tension de seuil (VR2) qui détermine le seuil (IS) de déclenchement à court-retard.

3. Déclencheur électronique selon la revendication 2, caractérisé par le fait que la deuxième tension de seuil (VR2) est ajustée par un commutateur à résistance (R13 à R16) ou un potentiomètre connecté à ladite diode (D; D2), dont l'anode est reliée à l'entrée déphaseuse de l'amplificateur intégrateur (14).

4. Déclencheur électronique selon l'une des revendications 1 à 3, caractérisé par le fait que le détecteur de niveau (16) comprend une première entrée soumise à la tension de seuil (Vo), et une deuxième entrée reliée à la sortie de l'amplificateur intégrateur (14) par une première diode (D5), et à la sortie d'un circuit déclencheur instantané (44) par une deuxième diode (D4).

5. Déclencheur électronique selon la revendication 4, caractérisé par le fait que le circuit déclencheur instantané (44) comporte un pont résistif (R6 - R7) branché en parallèle aux bornes du sélecteur (52) et alimenté par un amplificateur différentiel (A1) dont les entrées sont connectées à une résistance (RM) de mesure du courant délivré par le capteur (36R, 36S, 36T).

**Patentansprüche**

1. Elektronischer Schalter-Auslöser zum Schutz eines Wechselstromnetzes, mit:

- einem Stromfühler (36R, 36S, 36T), um die Stromstärke in jeder Leitung (R, S, T) des Netzes zu messen.

- einem zeitverzögerten Auslösekreis (42) zur Kontrolle des vom Fühler abgegebenen und den Strom darstellenden Signals und der durch Annäherung den Inverszeit-Auslösekennwert des Schalters ermitteln kann, mittels eines Integrator-Analog-Ausführers mit einem Operationsverstärker (10, 20, 30), der zwei gegenphasige Eingänge aufweist und einen Gegenkopplungs-Kondensator (C), der zwischen dem Ausgang des Verstärkers und dem Phasenverschieber-Eingang geschaltet ist,

- einem Niveau-Detektor (16), der von dem Ausgang des Integrator-Verstärkers gesteuert wird, und der einen Steuerbefehl an ein Schaltorgan abgibt, wenn das Ausgangssignal des zeitverzögerten Auslösekreises einen vorbestimmten Wert überschreitet als Antwort auf eine ungewöhnlich starke Erhöhung des Leitungsstromes,

- und mit einer Auslösespule (56), deren Erregung durch das Schaltorgan gesteuert wird, um die Öffnung der Schalterkontakte zu bewirken, dadurch gekennzeichnet, dass der direkte Eingang des Verstärkers des Integrator-Analog-Ausführers (10, 20, 30) mit einem Diskriminator (52) verbunden ist der ein den zu überwachenden Strom wiedergebendes Signal (Ve) aussendet und dass der Phasenverschieber-Eingang des genannten Verstärkers fortlaufend durch mindestens ein Referenz-Signal gesteuert wird, das einer vorbestimmten Schwellenspannung (VR1, VR2, VR3) entspricht, so dass die Zeitkonstante des Integrators von dem Gegenkopplungs-Kondensator (C) bestimmt wird, und einen Widerstand (R; R1, R2, R3; R19, 54), der in dem der Schwellenspannung (VR1, VR2, VR3) unterworfenen Eingangsstromkreis geschaltet ist, wobei das Ganze so ausgebildet ist, dass die Auslösezeit (t) des zeitverzögerten Auslösekreises (42) mit der Gleichung

$$L \quad \frac{b-aI}{aI-c}$$

assimiliert ist, welche durch das integrierte Ausgangssignal des Ausführers, bestimmt wird, wobei die Parameter, "L" und "c" die Zeitkonstante bzw. die Schwellenspannung (VR1, VR2, VR3) des Integrators darstellen, "b" die Schwellenspannung (Vo) des am Ausgang des Ausführers (10, 20, 30), angeordneten Niveau-Detektors (16) und "a" einen Proportionalitäts-Koeffizienten, der von dem Diskriminator (52) geregelt wird.

2. Elektronischer Auslöser gemäss Anspruch 1, dadurch gekennzeichnet, dass der Phasenverschieber-Eingang des Integrator-Verstärkers (14) durch einen ersten Widerstand (R1) und einen zweiten Widerstand (R2) geleitet wird mittels einer ersten und bzw. zweiten Schwellenspannung (VR1, VR2) von unterschiedlichen Werten, und dass eine Diode (D) zwischen dem zweiten Widerstand (R2) und dem genannten Phasenverschieber-Eingang geschaltet ist, so dass der Integrator-Verstärker (14) eine erste Zeitkonstante aufweist, die für einen Langzeitverzögerungs-Schutz (LR) gegen Überströme geeignet ist, wenn der Wert der Eingangsspannung (Ve), der dem Signal des zu überwachenden Stroms entspricht, zwischen den Referenzwerten der ersten (VR1) und der zweiten (VR2) Schwellenspannung liegt, und eine zweite Zeitkonstante aufweist, die niedriger als die erste ist, zum Kurzzeitverzögerungs-Schutz (CR) gegen Kurzschlüsse, wenn die Eingangsspannung (Ve) höher ist als die zweite Schwellenspannung (VR2), wobei die Veränderung der Zeitkonstante für den Wechsel der Auslöseart, mit Langzeitverzögerung (LR) oder mit Kurzzeitverzögerung (CR), automatisch erfolgt, gemäss dem Wert der genannten zweiten Schwellenspannung (VR2), welcher die Kurzzeitverzögerungs-Auslöseschwelle (IS) bestimmt.

3. Elektronischer Auslöser gemäss Anspruch 2, dadurch gekennzeichnet, dass die zweite Schwellenspannung (VR2) durch einen Schalter mit Widerständen (R13-R16) oder einen Potentiometer eingestellt wird, der mit der genannten Diode (D; D2) verbunden ist, deren Anode mit dem Phasenverschieber-Eingang des Integrator-Verstärkers (14) verbunden ist.

4. Elektronischer Auslöser gemäss einem der Ansprüche 1-3, dadurch gekennzeichnet, dass der Niveaudetektor (16) einen ersten der Schwellenspannung (Vo) unterworfenen Eingang aufweist, sowie einen zweiten Eingang, der mit dem Ausgang des Integrator-Verstärkers (14) durch eine erste Diode (D5) und mit dem Ausgang eines unverzögerten Auslösekreises (44) durch eine zweite Diode (D4) verbunden ist.

5. Elektrischer Auslöser gemäss Anspruch 4, dadurch gekennzeichnet, dass der unverzögerte Auslösekreis (44) eine Widerstandsbrücke (R6-R7) aufweist, die parallel mit den Klemmen des Diskriminators (52) geschaltet ist und von einem Differential-Verstärker (A1) gespeist wird, dessen Eingänge mit einem Messwiderstand (RM) des vom Fühler (36R, 36S, 36T) abgegebenen Stromes verbunden sind.

**Claims**

1. Electronic trip device associated with a circuit breaker for protecting an alternating current net system, comprising.

- a current sensor (36R, 36S, 36T) to measure the intensity of the current flowing in each line (R, S, T) of the net system,

- a time-lag tripping circuit (42) for controlling the representative signal of the current generated by the sensor and able to elaborate by approximation the inverse time tripping characteristic of the circuit breaker by means of an integrating analog operator with an operational amplifier (10, 20, 30) comprising two inputs in phase and a negative feed-back capacitor (C) connected between the output of the amplifier and the phase-shifter input,

- a level detector (16) driven by the output of the integrating amplifier and generating a control order to a switching member when the output signal of the time-lag tripping circuit exceeds a predetermined threshold in reply to an excessive increase of the line current,

- and a tripping coil (56), the excitation of which is driven by the switching member to cause the opening of the circuit breaker contacts, characterized by the fact that the direct input of the amplifier of the integrating analog operator (10, 20, 30) is connected to a selector (52) delivering a signal (Ve) representative of the current to monitor, and that the phase-shifter input of said amplifier is driven permanently by at least a reference signal corresponding to a predetermined threshold voltage (VR1, VR2, VR3) so that the time constant of the integrator is determined by the negative feed-back capacitor (C) and a resistance (R, R1, R2, 23, R19, 54) connected in the input circuit bound by the threshold voltage (VR1, VR2, VR2), the whole being so arranged that the tripping time (t) of the time-lag tripping circuit (42) is classed as the relation

$$L\ \frac{b-aI}{aI-c}$$

defined by the integrated output signal of the operator, the parameters "L" and "c" representing the time constant and the threshold voltage (VR1, VR2, VR3) of the integrator respectively, "b" the threshold voltage (Vo) of the level detector (16) disposed at the operator output (10, 20, 30) and "a" a proportionality coefficient set by the selector switch (52).

2. Electronic tripdevice according to claim 1, characterized by the fact that the phase-shifter input of the integrating amplifier (14) is driven through a first resistance (RI) and a second resistance (R2) respectively by a first and second threshold voltage (VR1, VR2) of different values, and that a diode (D) is inserted between the second resistance (R2) and said phase-shifter input so that the integrating amplifier (14) includes at least a first time constant adapted to a long-time delay (LR) protection against the over-currents when the value of the input voltage (Ve) corresponding to the representative signal of the current to monitor is comprised between the reference values of a first (VR1) and a second (VR2) threshold voltages, and a second time constant below the first one for a short-time dela (CR) protection against the short-circuits when the input voltage (Ve) is above the second threshold voltage (VR2), the time-lag tripping mode with long time delay (LR) or short time delay (CR) occuring automatically depending on the value of this second voltage (VR2) which determines the short delay tripping threshold (IS).

3. Electronic trip device according to claim 2, characterized by the fact that the second threshold voltage (VR2) is set by a resistance switch (R13 to R16) or a potentiometer connected to the said diode (D; D2) the anode of which is connected to the phase-shifter input of the integrating amplifier (14).

4. Electronic trip device according to any of the claims 1 to 3, characterized by the fact that the level detector (16) comprises a first input set at the threshold voltage (Vo), and a second input connected to the output of the integrating amplifier (14) by a first diode (D5), and to the output of an instantaneous tripping circuit (44) by a second diode (D4).

5. Electronic trip device according to claim 4, characterized by the fact that the instantaneous tripping circuit (44) comprises a resistive bridge (R6-R7) branched in parallel to the selector terminals (52) and suppplied by a differential amplifier (A1), the inputs of which are connected to a resistance (RM) to measure the current generated by the sensor (36R, 36S, 36T).

Figure 1

Figure 2

Figure 3

Figure 4

## 30

Figure 5

## 32

Figure 6

5

Figure 7